# EUROPEAN PATENT APPLICATION

(11) **EP 2 706 700 A1**
(43) Date of publication of application: **12.03.2014**
(21) Application number: 12871804.6
(22) Date of filing: 18.04.2012
(51) Int. Cl.: H04L 9/32

(54) **COMPUTER ACCOUNT MANAGEMENT SYSTEM AND IMPLEMENTATION METHOD THEREOF**

(30) Priority: 20.03.2012 CN 201210075795
(71) Applicant: Guangdong Electronics Industry Institute Ltd., Dongguan, Guangdong 523808 (CN)
(72) Inventor: XU, Zhiwei, Dongguan Guangdong 523808 (CN); LI, Guojie, Dongguan Guangdong 523808 (CN); LI, Xiaolin, Dongguan Guangdong 523808 (CN); XIE, Yi, Dongguan Guangdong 523808 (CN); YUE, Qiang, Dongguan Guangdong 523808 (CN)
(74) Representative: Hocking, Adrian Niall
(86) International application number: PCT/CN2012/000535
(87) International publication number: WO 2013/138954

(57) **Abstract**

The present invention relates to the technical field of computer applications, and in particular, to a computer account management system and an implementation method thereof. The system in the present invention is formed of five subsystems, that is, an account management subsystem, an information asset management subsystem, an identity authentication (integration) subsystem, a service (integration) subsystem, and an account porta. The account management subsystem implements physical account and logical account information management. The information asset management subsystem manages data information resources generated during an activity of a physical account information network. The identity authentication subsystem provides an authentication integration interface for a physical account. The service subsystem is a customizable interface open to the Internet or an intranet. The account portal provides interfaces and tools for account login, management of a list of services subscribed or purchased by an account, account information management, and information asset management. The present invention provides a general calculation account system that is not bound to any service, is seamlessly integrated with user information assets and valid in a lifetime, and can be applied to account management in the Internet.

## Description

### Technical Field

The present invention relates to the technical field of computer applications, and in particular, to a computer account management system and the implementation method thereof.

### Background Art

In the current domestic and abroad Internet online service environment, whenever a user uses a service from a service provider, the user needs to apply for one or multiple user accounts. In this regard, a user needs to maintain many various user names and passwords. On the one hand, such kind of complex authentication method has already become a burden to the user or even an obstacle; also, they make it easy to commit online frauds such as password theft, and identity theft. Online businesses are faced with ever-increasing costs for user account management, as well as the huge losses due to the online frauds. On the other hand, user's personal information and user's personal information assets generated during the service process have been separated into a number of unrelated service provider account systems. Not only users need to pay for such services provided by these service providers, but also such information assets that should belong to the users now become the service provider's information assets, or are even illegally abused by certain service providers. Thus it is difficult to enable such information to become the user's life time valid person information assets.

The fundamental reason that causes such kind of technical problem is that the current Internet service lacks a set of universal computer account (UCA) management system. Currently, computer and Internet become the indispensable essential entities of a quite lot of people's daily life. The penetration rate of the computers dedicated to person / family becomes increasingly higher. However, as the first threshold for users to get access to and use the Internet, the user systems are actually independently developed, configured and operated by each individual application network service provider based on the various needs of their respective services. They lack a unified user information standards, and their safety requirements and authentication methods are quite different. Users have to meet the requirements of each service provider, to go to each individual website to separately register of the set of user information, and then manage the respective user names, passwords, certificates and so on. Also, these user information and assets have been fixedly bound to the respective service providers. In the computer dedicated to an individual user, there is no one universal computer account system to provide a universal computing account system that is not bound to any service (provider), seamlessly integrated with user information assets and valid in a life time.

The trend of the basic demand of Internet service, in particular the cloud computing service, is to provide a professional and non - stop network services. The word 'professional' relates to providing specified professional service function to a particular group of receiving people, so as to reduce the costs of such group of users for such type of cloud service's development, configuration, maintenance and management. The word 'non - stop' relates to providing a transparent (unnecessary for the cloud service developers to participate) seamless integration capacity of resources and services to the professional cloud service, as well as the transparent capability of operation and management. In this way, it will reduce the cost of integration at the resource service end, and implement it in the manner of express through train; as well as enhance user end's cloud experience, so as to achieve the non - stop service, which becomes the basic requirement of current Internet service, in particular the cloud computing service. The research and development of the universal computer account system are the foundation and fundamental for solving the cross - service provider, cross - system seamless integration of the resources at the service end, and enhancing the non - stop cloud service experience at the user end.

### Description of Invention

One of the technical problems that the present invention is aimed to solve is to provide a computer account management system, to provide a universal computer account system that is not bound to any service (provider), is seamlessly integrated with data information assets and valid in a life time, and to provide a set of self-own, safe, convenient and interactively operative account portals for user connection and utilization of network service that satisfies UCA account standard interface.

The second technical problem that the present invention is aimed to solve is to provide an implementation method of the computer account management, which is to address the issues that the user systems of the current network services are all independently developed and operated by individual service providers, thus they lack a unified standard; and that users need to manage multiple separated user names and passwords, which results in the issues of trouble of using, being unsafe and user's data assets being separated; and at the same time, the problems of repetitive developments of user system, and the high management costs.

The technical solution of the present invention to solve one of the above mentioned technical problems is:
Said system is formed of five subsystems, that is, an account management subsystem, an information asset management subsystem, an identity authentication subsystem, a service subsystem, and an account portal.
said account management subsystem, at two levels implementing account information management and mapping relationship management, one being the physical level account information management, i.e., the creation, modification, deletion and maintenance of the basic property information of people in the physical world; the other one is the logic account information management, i.e., the dynamic creation, modification, deletion and maintenance of the particular identity information bound to the service in an information network world, the dynamic creation of identity and property information, and through the account system automatically bound to the specific network service, or automatically unbound it; one physical account may be correspondingly mapped to 0 or multiple logic user accounts;
said information asset management subsystem, an entire life cycle management of the data information resources generated during network activities in a physical account within its entire life cycle period;
said identity authentication subsystem, providing authentication integration interface to the physical account, performing authentication for validity and authenticity of an identity, and authorizing a digital certificate;
said service subsystem, providing interactive interfaces between the account management subsystem and information asset management subsystem, and the service provided by a service provider, providing functions of account or logic account information access / authentication according to the logic account identity that is bound to said service, design and integration of an information asset view, information synchronization, consistency maintenance, being a customizable interface open to the Internet or an intranet;
said account portal, providing interfaces and tools for account login, management of a list of services subscribed or purchased by an account, account information management, and information asset management.

Said account management subsystem also comprises account / password authentication, as well as data certificate management.

Said information asset management, from the perspective of physical account, sorting, storing, organizing and maintaining managements of the data assets generated in every logic account in the information world, according to the information view designated by the physical account design, so as to form an account management system that is completely independent from the service providers. When the life cycle of a logic account is over, the data information generated by it remains valid for entire life time. The information asset management subsystem is also responsible to provide unified storage, management and access functions to the system related other data, such as physical account and logic account.

Said service subsystem provides four interface functions, which are, respectively, information view, identity authentication, information synchronization and customizing interface;
information view, automatically bound to the service logic account, representing physical account identity, customizing the information view mode that needs to be saved according to the mode of the data information generated in the interactive process during the service" and then mapping into the virtual tables in the information asset management subsystem, thereby implementing data exchanging and docking between service and information assets through the view defined in between;
identity authentication, in regards to the service that needs system identity authentication in order to access it, the integration interface between the service and system account information acquisition / authentication docking is to be implemented; such interface for service development is also to be provided for the service that has been developed directly based on the UCA system standard interface;
information synchronization, making information synchronization strategy, the account, through its logic account identity, implementing data acquisition from the service end either manually or according to the customized strategy,;
interface customization, providing extensible interface for the service integration with the system.

Said account portal providing account login interface, service listing management interface, account management interface and asset management interface;
said account login interface, implementing account single login, after login showing a service listing that the account can access, and a management menu;
service listing management interface, managing and subscribing the service listing that the subject account needs to access, when a new service has been added, being capable of timely initiating an interface for creating logic account, if needed;
account management interface, creating, modifying and maintaining accounts information, limiting that a user, other than administrator, can only manage his or her own accounts information;
asset management interface, defining a view and mapping interface, and a synchronization strategy interface.

The technical solution of the present invention for solving the second one of the above mentioned technical questions is:
in a system that comprises two servers, firstly, the system by default comprising an administrator user, who is responsible for the processes of system configuration and initiation;
the process from configuration, initiation to system operation being divided into a few steps;
step one, setting up the system on every node, then configuring other server nodes from the configuration file of the current node;
step two, via the initiation operation, configuring the initial environment needed by system operation: 1) creating a system community, the No. 0 community, on the local server, generally, the No. 0 community needs to designate its default database server and database of its mapping, the initiated virtual table needed by the system being mapped into the physical database table, and finally being saved into the default database; the initiated resources comprising virtual account table, virtual logic account table, asset virtual table; furthermore, according to the needs of actual application scenario, it is selectable whether these tables are configured or whether these tables are configured in the No. 0 community, and may also adding the configuration of other virtual tables; 2) initiating system's administrator user account;
step three, through the administrator user logging into the No. 0 community of the local server, the No. 0 community comprising a function of community creation; the administrator may use said function to create another community n, when creating a community, the virtual tables needed by the community can be automatically configured, and similarly, the storage locations of the physical database tables that are mapped from these virtual tables need to be designated, and when a new community has been created, a community administrator will be assigned to that community, later on when logging into that community, the community administrator is capable of adding or managing the virtual table resources of that community, and may also manage other registered accounts in that community, each account of the community can, in current community, configure and manage its own asset virtual tables; similarly, a community m can be created at another node, in regard to the community that has been created on each node, the community's configuration file being dynamically and synchronously copied to other service nodes, so as to ensure that the communities on multiple nodes have the unified unique number in the entire system;
step four, a service interface developed for any community can have a community code; virtual table code can transparently get access to the asset subsystem via virtual tables' access interface, wherein, the program developers are not necessarily the accounts in the community, while when the program is running, it can, according to the identity of the current visiting user, determine within the asset management subsystem about whether that user has an authority to get access to the virtual tables.

The specific procedures are set forth below:
process S1 stands for a user using a system portal to login or register a new physical account; process S2 stands for the system checking whether it needs to perform an account identity authentication to the newly registered physical account, so as to verify authenticity and validity of the identity of that user, in the case when no authentication is necessary or it is a login from an existing account, then directly jumping to the process S4; process S3 stands for the identity authentication subsystem performing authentication to the digital identity certificate provided by the user; process S4 stands for checking the list of all the available services that are under an individual account; process S5 stands for checking if a target service need to be used is in the list of available services, if it is, then directly jumping to process S8; process S6 stands for utilizing service integration unified interface to seamlessly access the target service; process S7 stands for entering a personal information asset management interface, and defining the information view of the target service; process S8 stands for selecting the target service to access; process S9 stands for checking whether the target service can be accessed via a physical account, if it can be, then directly jumping to process S11; process S10 stands for creating a logic account, which will be then dynamically bound to the target service as the account for getting access to the target service; process S11 stands for sending service request to the target service; process S12 stands for receiving responsive data from the target service.

The present invention, from the perspective of the user end, rather than from the perspective of the service provider, has developed a universal computer account (UCA) system, to implement a unified and connected management to the person in the physical world, multiple network identities in the information world, and data life cycle of the production activity, so as to avoid the problems that previously each person in the physical work needs to individually record and manage the account information specified by many independent service providers, as well as that a user's data assets have been separated and thus can not be effectively concentrated and integrated for reuse. Through providing a universal computer account system that is not bound to any service (provider), it is seamlessly integrated with data assets, and valid in a lifetime. It provides a set of self-own, safe, convenient and interactively operative account portals for a user connecting and using of the network services that satisfy UCA account standard interface.

When using the present invention, an individual user, after logging into the universal computer account (UAC) management system, is capable of getting non - stop accessing to network services from a plurality of service providers, which satisfy the UCA account standard interface (system automatically implementing logic account identity switch), so as to achieve the cross - service provider, cross - system and seamless integration of personal data. A service provider (such as a cloud provider) is able to implement integration and concentration in a through train manner at the resource end, and with no concern about the need to provide information differences in the obtained respective particular user identity and the docking issue when integrating different resources system. Therefore, it can greatly reduce the costs of cloud calculation's resource service and operation management, and enhance a user's cloud experience.

For the network service based on the present invention or the current network service that has been integrated of the present invention, users can make non - stop access to all of them via the unified universal account, and with no need of cumbersomely recording a plurality of individual accounts / passwords, and thereby can implement a life time effective management and utilization of the personal information assets, so as to achieve that users' account do not need to be bound to the particular service providers, and that switching service (provider) would be as easy as switching TV channels.

### Description of Drawings

In reference of the accompanying drawings, the present invention will be further described:
FIG. 1 is a structural view of the universal computer account (UCA) management system of the present invention;
FIG. 2 is a schematic view of the configuration and access of the information asset management subsystem that is based on community and virtual tables.
FIG. 3 is a user case process diagram based on the universal computer account (UCA) system.

### Description of Embodiments

A part of the implementation of the information asset management subsystem of the present invention is based on the Chinese Patent 200810119858. 4 (title: a network system and the management method thereof), the community and virtual tables, and the management and utilization method thereof are all referenced from that patent.

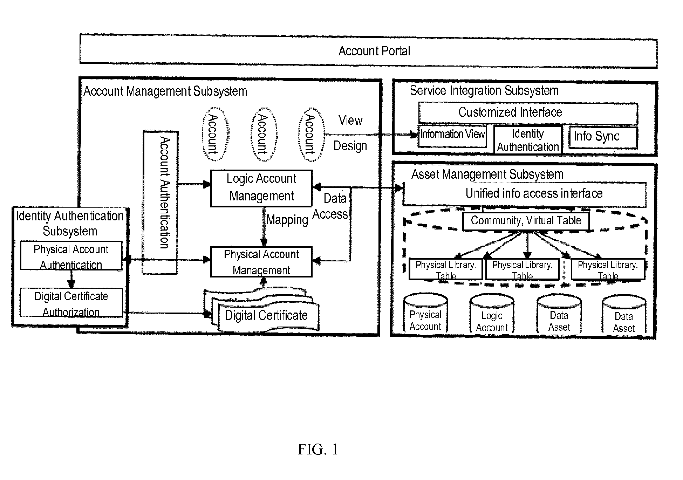

FIG. 1 represents a structural view of the universal computer account (UCA) management system. It comprises five critical subsystem components in order to implement universal account management, as well as the calling relationship among them. The particular implementation approaches of the specific subsystems are set forth below:
A: Account management subsystem, which can be divided into two parts, physical account management and logic account management.
   1) physical account management: the core of the account management is the management of identity information of a person in the physical world. The basic process of physical account management is : (1) a user who needs to apply for an account, applying for registration via the account portal; (2) submitting a physical account form, said form comprising: name, password, gender, birth date, address, telephone and other properties, and these properties are all extensible, which is implemented via extending virtual table property of the account; (3) (at operation center) account management system administrator reviewing said physical account information (if it is a single user account that has been installed in a user's personal computer, then this operation can be omitted), if it is needed to apply for a digital certificate for that account, then submitting an application to an identity authentication agent, and then receiving an authorization digital certificate, so as to become a valid account;
   2) logic account management: the core of logic account management is the management of multiple identity information in the information world, each identity is a specific identification of said physical account. The process of logic account management is a dynamic process related to the process of user accessing services, its basic process is: (1) via physical account / password, a user logging into the account portal, and inquiring the network service to access via the account portal (the cloud service developed according to the UCA system standard interface, or the network service that has been integrated with the UCA). If these services can be accessed directly from the physical account, then omitting the steps (2) and (3) set forth below, continuing to the following steps otherwise; (2) according to the requirements of the service, submitting logic account identity information form for that service, the specific information has been submitted is relative to said service, yet in general, it always has a user ID that satisfies uniqueness, these properties are all extensible, which can be implemented via extending the properties of account virtual tables; (3) automatically binding said logic identity to said service; (4) accessing the service (the internal operation may provide the associated physical account digital certificate to the service so as to conduct a safe identity authentication); (5) logic account defining the data information asset view generated during the interactive activities with the service, i.e., creating information view and then mapping it to the asset virtual table in the asset management subsystem, so as to allow the asset management subsystem to obtain the corresponding information assets; (6) logic account submitting request to implement acquisition of the newly generated information assets (or setting up an automatic acquisition strategy).
B: Asset management subsystem
   Asset management subsystem is the system that provides a unified storage, management and access for the relative data of the entire UCA system comprising physical account, logic account, information assets and etc. Its interior also adopts the data virtualization mechanism of community and virtual tables in order to provide the unified and transparent access interfaces, and at the physical level, it utilizes database and file system to perform the data storage. Due to the fact that both the community and the virtual tables can be extended online, the universal computer account (UCA) system can theoretically online manage the users in the scale of hundreds of millions. There are mainly three types of virtual tables in a community of the asset management system: virtual account table, to save physical account information; virtual logic account table, to save logic account information; asset virtual table, to save user information assets. The properties of these three types of virtual tables are all extensible, wherein, the first two types of virtual tables belong to UCA's administrator, other users can not create or modify them, while for the asset virtual table, it is generated via defining the information view and then mapping it into the virtual table by the account through the logic account identity and according to the service's data schema. Said virtual table (as well as the physical data entity that it has been mapped from) belongs to the physical account corresponding to said logic account, and belongs to the private information assets, and thus other users can not access; yet physically multiple users (tenants) actually can share the same database instance or database table, so as to embody the multitenant application mode.
C: Identity authentication (integration) subsystem
   The identity authentication (integration) subsystem provides identity authentication integration interface, when need to authenticate the validity and authenticity of the physical account's identity, the two interfaces of providing authentication request and obtaining authorization certificate for the third party or credible authentication agency.
D: Service (integration) subsystem
   Service (integration) subsystem providing four interface functions, these interface functions need to provide implementation supports to the corresponding interfaces according to the universal computer account (UCA) system standard by the service providers, when they develop and integrate the services. The specific implementation of each interface is set forth below:
   1) Information view: automatically bound to the service logic account, representing physical account identity, according to the schema of the data information generated in the interactive process during the service, customizing it to the information view mode that needs to be saved (comprising property selection and format switch), and then being mapped to the virtual table in the information asset management subsystem, thereby implementing the data exchange and docking between the service and information assets via the view defined by the middle. It needs the service to provide interface support to acquire its data schema.
   2) Identity authentication: in regard to the service that needs system identity authentication in order to visit it, the integration interface between the service and UCA account (logic account) information acquisition / authentication docking needs to be implemented; in regard to the service that has been developed directly based on the UCA system standard interface, such interface also needs to be provided for service development.
   3) Information synchronization: making information synchronization strategy (synchronization of time, frequency, update manner (overall / increase)), an account, through its logic account identity manually or according to the customized strategy, implementing data acquisition from the service end. It needs the service to provide interface supports to acquire its data.
   4) Interface Customization: providing extensible interface for the service (provider) integration with the system.
E: Account portal
   The specific implementation mode of the account portal is to provide a few interfaces set forth below:
   1) Account login interface: implementing account single login, after login showing a service listing that the account can access, and the management menu as well.
   2) Service listing management interface: managing and subscribing the service listing that the subject account needs to access, when a new service has been added, if needed, being capable of timely initiating an interface for creating logic account.
   3) Account (logic account) management interface: creating, modifying and maintaining accounts information, limiting that a user other than administrator can only manage his or her own accounts information.
   4) Asset management interface: defining a view and mapping interface; and a synchronization strategy interface.

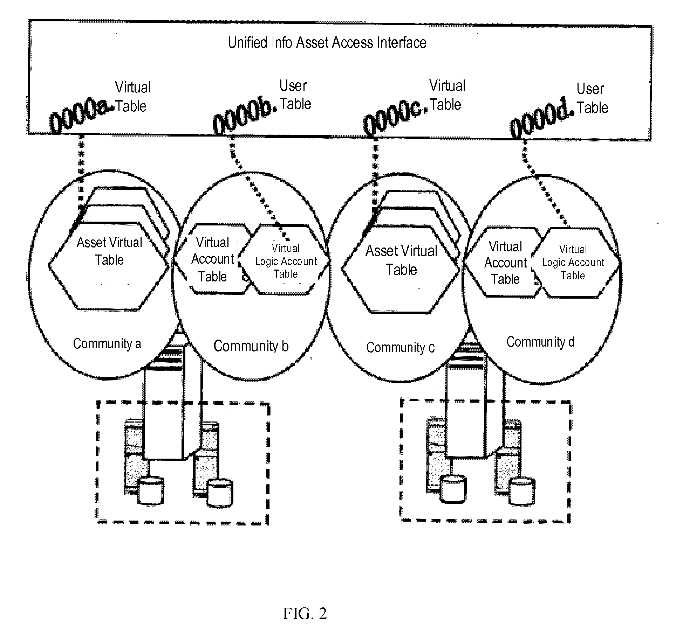

In the FIG. 2, it represents that in a UCA system comprising two servers, a schematic diagram about the configuration and access relative to community, virtual table and data storage in the information asset subsystem. Firstly, the system by default comprises an administrator user, who is responsible for the processes of system configuration and initiation. The process from said configuration and initiation to system operation can be divided into a few steps. Step one, setting up the system on every node, then configuring other server nodes from the configuration file of the current node. Step two, via the initiation operation, configuring the initial environment needed by system operation: 1) creating a system community (No. 0 community) on the local server, in general, the No. 0 community needs to designate its default database server and database of its mapping, the initiated virtual table needed by the system being mapped into the physical database table, and finally being saved into the default database. The initiated resources comprises virtual account table, virtual logic account table, asset virtual table. Of course, according to the needs of actual application scenario, it is optional about whether configuring these tables or whether configuring them into the No. 0 community, and may also adding the configuration of other virtual tables; 2) initiating system's administrator user account. Step three, through the administrator user logging into the No. 0 community of the local server, the No. 0 community comprises a function of community creation. The administrator may use said function to create another community n, when creating a community, the virtual tables needed by the community can be automatically configured, and similarly, the storage locations of the physical database tables that are mapped from these virtual tables need to be designated, and when a new community has been created, a community administrator will be assigned to that community, later on when logging into that community, the community administrator is capable of adding or managing the virtual table resources of that community, may also manage other registered accounts in that community, each account of the community can, in current community, configure and manage its own asset virtual tables. Similarly, a community m can be created at another node, in regard to the community that has been created on each node, the community's configuration file being dynamically and synchronously copied to other service nodes, so as to ensure that the communities on multiple nodes have the unified unique number in the entire system. Step four, a service interface developed for any one community can have a community code. A virtual table code (cid.vid) can transparently get access to the asset subsystem via virtual tables' access interface, wherein, the program developers are not necessarily the user accounts in the community, while when the program is running, within the asset management subsystem, it can, according to the identity of the current visiting user, determine whether that user has the authority to access to the virtual tables.

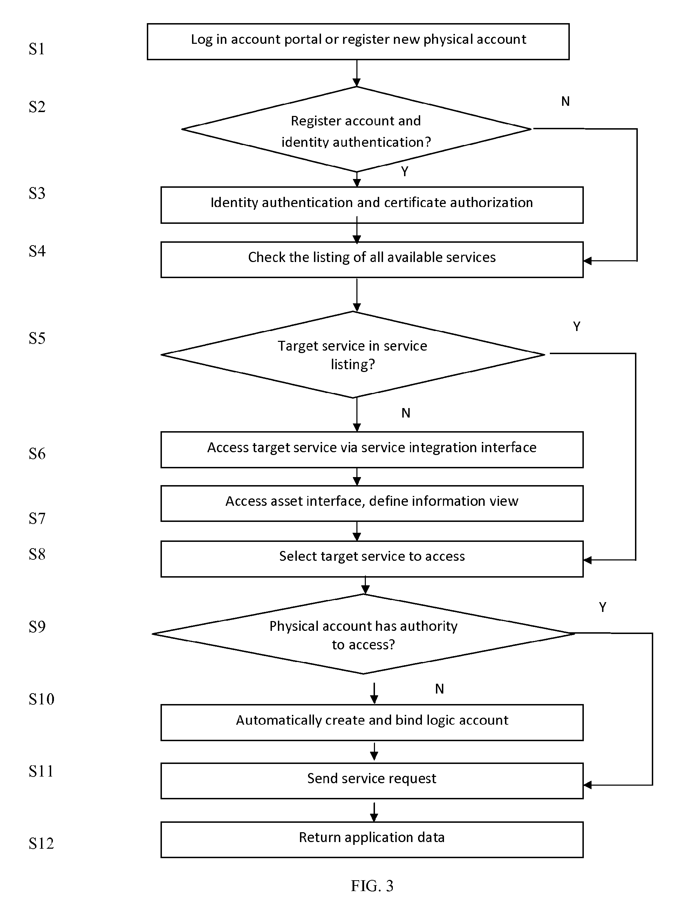

FIG. 3 represents a user case process of a user using the universal computer account (UCA) system: process S1 stands for a user using a system portal to login or register a new physical account; process S2 stands for the system checking whether need to perform an account identity authentication to the newly registered physical account, so as to verify authenticity and validity of the identity of that user, in the case when no authentication is necessary or it is a login from an existing account, then directly jumping to the process S4; process S3 stands for the identity authentication subsystem performing authentication to the digital identity certificate provided by the user; process S4 stands for checking the list of all the available services that are under an individual account; process S5 stands for checking if a target service need to be used is in the list of available services, if it is, then directly jumping to process S8; process S6 stands for utilizing service integration unified interface to seamlessly access the target service; process S7 stands for entering a personal information asset management interface, and defining the information view of the target service; process S8 stands for selecting the target service to access; process S9 stands for checking whether the target service can be accessed via a physical account, if it can be, then directly jumping to process S11; process S10 stands for creating a logic account, which will be then dynamically bound to the target service as the account for getting access to the target service; process S11 stands for sending service request to the target service; process S12 stands for receiving responsive data from the target service.

The present invention has advantages in the three aspects: 1) not bound to any service provider, a user can switch service, website as easy as switching TV channels currently; 2) the data information assets generated during the process of a user using network service can be seamlessly integrated together according to the user's intension; 3) the user data assets are valid for a life time, and belong to the assets that an individual can manage and control, and can be inherited.

In regard to its utilization mode, the present system supports two types of user modes: 1) single user mode: can be installed and configured into a user's personal computer, as the account portal system for the user to login and use the Internet; 2) multiple user mode: account service is provided by the unified operation of an independent, credible account operator (or public governmental agency), the client end of the computer of an individual user (adopting the mode of Client / Server or Brower / Server) is firstly connected to the operation account system, to obtain its own identity, and then is connected and using the Internet.

## Claims

1. A computer account management system, **characterized by**: said system being formed by five subsystems, an account management subsystem, an information asset management subsystem, an identity authentication subsystem, a service subsystem, and an account portal,
said account management subsystem, at two levels implementing account information management and mapping relationship management, one being the physical level account information management, i.e., the creation, modification, deletion and maintenance of the basic property information of people in the physical world; the other one is the logic account information management, i.e., the dynamic creation, modification, deletion and maintenance of the particular identity information bound to the service in an information network world, the dynamic creation of identity and property information, and through the account system automatically bound to the specific network service, or automatically unbound it; one physical account may be correspondingly mapped to 0 or multiple logic user accounts;
said information asset management subsystem, an entire life cycle management of the data information resources generated during network activities in a physical account within its entire life cycle period;
said identity authentication subsystem, providing authentication integration interface to the physical account, performing authentication for validity and authenticity of an identity, and authorizing a digital certificate;
said service subsystem, providing interactive interfaces between the account management subsystem and information asset management subsystem, and the service provided by a service provider, providing functions of account or logic account information access / authentication according to the logic account identity that is bound to said service, design and integration of an information asset view, information synchronization, consistency maintenance, being a customizable interface open to the Internet or an intranet;
said account portal, providing interfaces and tools for account login, management of a list of services subscribed or purchased by an account, account information management, and information asset management.

2. A computer account management system as set forth in claim 1, **characterized by**: said account management subsystem also comprising account / password authentication and data certificate management.

3. A computer account management system as set forth in claim 1 or claim 2, **characterized by**: said information asset management from the perspective of physical account, sorting, storing, organizing and maintaining managements of the data assets generated in every logic account in the information world according to the information view designated by the physical account design, so as to form an account management system that is completely independent from the service providers; when the life cycle of a logic account is over, the data information generated by it remains valid for entire life time; the information asset management subsystem is also responsible to provide unified storage, management and access functions to the system related other data, such as physical account and logic account.

4. A computer account management system as set forth in claim 1 or claim 2, **characterized by**: said service subsystem providing four interface functions, which are, respectively, information view, identity authentication, information synchronization and customizing interface;
information view, automatically bound to the service logic account, representing physical account identity, customizing the information view mode that needs to be saved according to the mode of the data information generated in the interactive process during the service, and then mapping into the virtual tables in the information asset management subsystem, thereby implementing data exchanging and docking between service and information assets through the view defined in between;
identity authentication, in regards to the service that needs system identity authentication in order to access it, the integration interface between the service and system account information acquisition / authentication docking is to be implemented; such interface for service development is also to be provided for the service that has been developed directly based on the UCA system standard interface;
information synchronization, making information synchronization strategy, the account, through its logic account identity, implementing data acquisition from the service end either manually or according to the customized strategy;
interface customization, providing extensible interface for the service integration with the system.

5. A computer account management system as set forth in claim 3, **characterized by**: said service subsystem providing four interface functions, which are, respectively, information view, identity authentication, information synchronization and customizing interface;
information view, automatically bound to the service logic account, representing physical account identity, customizing the information view mode that needs to be saved according to the mode of the data information generated in the interactive process during the service, and then mapping into the virtual tables in the information asset management subsystem, thereby implementing data exchanging and docking between service and information assets through the view defined in between;
identity authentication, in regards to the service that needs system identity authentication in order to access it, the integration interface between the service and system account information acquisition / authentication docking is to be implemented; such interface for service development is also to be provided for the service that has been developed directly based on the UCA system standard interface;
information synchronization, making information synchronization strategy, the account, through its logic account identity, implementing data acquisition from the service end either manually or according to the customized strategy;
interface customization, providing extensible interface for the service integration with the system.

6. A computer account management system as set forth in claim 1 or claim 2, **characterized by**: said account portal providing account login interface, service list management interface, account management interface, asset management interface;
said account login interface, implementing account single login, after login showing a service listing that the account can access, and a management menu;
service listing management interface, managing and subscribing the service listing that the subject account needs to access, when a new service has been added, being capable of timely initiating an interface for creating logic account, if required;
account management interface, creating, modifying and maintaining accounts information, limiting that a user, other than administrator, can only manage his or her own accounts information;
asset management interface, defining a view and mapping interface, and a synchronization strategy interface.

7. A computer account management system as set forth in claim 3, **characterized by**: said account portal providing account login interface, service list management interface, account management interface, asset management interface;
said account login interface, implementing account single login, after login showing a service listing that the account can access, and a management menu;
service listing management interface, managing and subscribing the service listing that the subject account needs to access, when a new service has been added, being capable of timely initiating an interface for creating logic account, if needed;
account management interface, creating, modifying and maintaining accounts information, limiting that a user, other than administrator, can only manage his or her own accounts information;
asset management interface, defining a view and mapping interface, and a synchronization strategy interface.

8. A computer account management system as set forth in claim 4, **characterized by**: said account portal providing account login interface, service list management interface, account management interface, asset management interface;
said account login interface, implementing account single login, after login showing a service listing that the account can access, and a management menu;
service listing management interface, managing and subscribing the service listing that the subject account needs to access, when a new service has been added, being capable of timely initiating an interface for creating logic account, if needed;
account management interface, creating, modifying and maintaining accounts information, limiting that a user, other than administrator, can only manage his or her own accounts information;
asset management interface, defining a view and mapping interface, and a synchronization strategy interface.

9. A computer account management system as set forth in claim 5, **characterized by**: said account portal providing account login interface, service list management interface, account management interface, asset management interface;
said account login interface, implementing account single login, after login showing a service listing that the account can access, and a management menu;
service listing management interface, managing and subscribing the service listing that the subject account needs to access, when a new service has been added, being capable of timely initiating an interface for creating logic account, if needed;
account management interface, creating, modifying and maintaining accounts information, limiting that a user, other than administrator, can only manage his or her own accounts information;
asset management interface, defining a view and mapping interface, and a synchronization strategy interface.

10. An implementation method of the system set forth in any one of claims 1 to 9, **characterized by**: in the system that comprises two servers, firstly, the system by default comprising an administrator user, who is responsible for the processes of system configuration and initiation;
the process from said configuration and initiation to system operation being divided into a few steps;
step one, setting up the system on every node, then configuring other server nodes from the configuration file of the current node;
step two, via the initiation operation, configuring the initial environment needed by system operation: 1) creating a system community, the No. 0 community, on the local server, generally the No. 0 community needs to designate its default database server and database of its mapping, the initiated virtual table needed by the system being mapped into the physical database table, and finally being saved into the default database; the initiated resources comprising virtual account table, virtual logic account table, asset virtual table; furthermore, according to the needs of actual application scenario, it is selectable whether these tables are configured or whether these tables are configured in the No. 0 community, and may also adding the configuration of other virtual tables; 2) initiating system's administrator user account;
step three, through the administrator user logging into the No. 0 community of the local server, the No. 0 community comprising a function of community creation; the administrator may use said function to create another community n, when creating a community, the virtual tables needed by the community can be automatically configured, and similarly, the storage locations of the physical database tables that are mapped from these virtual tables need to be designated, and when a new community has been created, a community administrator will be assigned to that community, later on when logging into that community, the community administrator is capable of adding or managing the virtual table resources of that community, and may also manage other registered accounts in that community, each account of the community can, in current community, configure and manage its own asset virtual tables; similarly, a community m can be created at another node, in regard to the community that has been created on each node, the community's configuration file being dynamically and synchronously copied to other service nodes, so as to ensure that the communities on multiple nodes have the unified unique number in the entire system;
step four, a service interface developed for any community can have a community code; virtual table code can transparently get access to the asset subsystem via virtual tables' access interface, wherein, the program developers are not necessarily the accounts in the community, while when the program is running, it can, according to the identity of the current visiting user, determine within the asset management subsystem about whether that user has an authority to get access to the virtual tables.

11. The implementation method as set forth in claim 10, **characterized by**: the specific process being set forth below:
process S1 stands for a user using a system portal to login or register a new physical account; process S2 stands for the system checking whether it needs to perform an account identity authentication to the newly registered physical account, so as to verify authenticity and validity of the identity of that user, in the case when no authentication is necessary or it is a login from an existing account, then directly jumping to the process S4; process S3 stands for the identity authentication subsystem performing authentication to the digital identity certificate provided by the user; process S4 stands for checking the list of all the available services that are under an individual account; process S5 stands for checking if a target service need to be used is in the list of available services, if it is, then directly jumping to process S8; process S6 stands for utilizing service integration unified interface to seamlessly access the target service; process S7 stands for entering a personal information asset management interface, and defining the information view of the target service; process S8 stands for selecting the target service to access; process S9 stands for checking whether the target service can be accessed via a physical account, if it can be, then directly jumping to process S11; process S10 stands for creating a logic account, which will be then dynamically bound to the target service as the account for getting access to the target service; process S11 stands for sending service request to the target service; process S12 stands for receiving responsive data from the target service.
